# EUROPÄISCHE PATENTSCHRIFT

(11) **EP 3 338 342 B1**
(45) Veröffentlichungstag und Bekanntmachung des Hinweises auf die Patenterteilung: **21.10.2020**
(21) Anmeldenummer: 16753260.5
(22) Anmeldetag: 22.07.2016
(51) Int. Cl.: H02J 50/60, H02J 50/12, H02J 7/02, H02J 7/00, H02J 50/10

(54) **HANDWERKZEUGMASCHINENLADEVORRICHTUNG**
HAND-HELD POWER TOOL CHARGING DEVICE
DISPOSITIF DE CHARGE DE MACHINE-OUTIL PORTATIVE

(30) Priorität: 21.08.2015 DE 102015216038
(43) Veröffentlichungstag der Anmeldung: 27.06.2018
(73) Patentinhaber: Robert Bosch GmbH, 70442 Stuttgart (DE)
(72) Erfinder: GONDA, Martin, 70191 Stuttgart (DE); MACK, Juergen, 73035 Goeppingen (DE); KRUPEZEVIC, Dragan, 70565 Stuttgart (DE)
(86) Internationale Anmeldenummer: PCT/EP2016/067550
(87) Internationale Veröffentlichungsnummer: WO 2017/032524

(56) Entgegenhaltungen:
- WO-A1-2009/108959
- DE-A1-102012 021 396
- US-A1- 2011 241 608
- US-A1- 2014 176 065
- US-A1- 2014 180 612
- US-A1- 2014 312 833

## Beschreibung

### Stand der Technik

Es ist bereits eine Handwerkzeugmaschinenladevorrichtung für Energiespeicher von Handwerkzeugmaschinen, die zu einer drahtlosen Energieübertragung vorgesehen ist, mit einem ersten Ladebereich und einer ersten Detektionseinheit zu einer Detektion eines Fremdkörpers in dem ersten Ladebereich, und mit zumindest einem weiteren Ladebereich und zumindest einer weiteren Detektionseinheit zu einer Detektion eines Fremdkörpers in dem zumindest einen weiteren Ladebereich vorgeschlagen worden (siehe auch DE102012112993 A1, US2014180612 A1, und US2011241608).

### Offenbarung der Erfindung

Die Erfindung geht aus von einer Handwerkzeugmaschinenladevorrichtung für Energiespeicher von Handwerkzeugmaschinen, die zu einer drahtlosen Energieübertragung vorgesehen ist, mit einem ersten Ladebereich und einer ersten Detektionseinheit zu einer Detektion eines Fremdkörpers in dem ersten Ladebereich, und mit zumindest einem weiteren Ladebereich und zumindest einer weiteren Detektionseinheit zu einer Detektion eines Fremdkörpers in dem zumindest einen weiteren Ladebereich.

Es wird vorgeschlagen, dass die Detektionseinheiten zumindest teilweise aufeinander abgestimmt sind, wobei die erste Detektionseinheit und/oder die zumindest eine weitere Detektionseinheit dazu vorgesehen sind/ist, die Detektion eines Fremdkörpers in dem ersten Ladebereich und/oder die Detektion eines Fremdkörpers in dem zumindest einen weiteren Ladebereich zu zumindest im Wesentlichen zufälligen Zeitpunkten zu beginnen.

Dadurch kann besonders wirkungsvoll eine gegenseitige Störung der Detektionseinheiten bei einem Detektionsvorgang von Fremdkörpern als erster Phase eines Ladevorgangs vermieden werden. Es kann ein unverfälschtes und/oder zuverlässiges Detektionsergebnis zu einer Vorbereitung eines Ladevorgangs erreicht werden. Es kann eine besonders zuverlässige Handwerkzeugmaschinenladevorrichtung bereitgestellt werden. Es kann ein besonders effizienter Ladevorgang erreicht werden. Unter einer "Handwerkzeugmaschinenladevorrichtung" soll in diesem Zusammenhang insbesondere eine Ladevorrichtung zum Landen von zumindest einem Energiespeicher für Handwerkzeugmaschinen, vorzugsweise von einer Mehrzahl von Energiespeichern für Handwerkzeugmaschinen, verstanden werden. Unter einer "Handwerkzeugmaschine" soll in diesem Zusammenhang insbesondere eine werkstückbearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Vorzugsweise weisen die zu ladenden Energiespeicher zumindest einen Akkupack auf. Vorzugsweise weisen die Energiespeicher eine Nennspannung von weniger als 50 V, bevorzugt von weniger als 40 V, besonders bevorzugt von weniger als 20 V auf. Vorzugsweise weisen die zu ladenden Energiespeicher eine Speicherkapazität von weniger als 10,0 Ah, bevorzugt von weniger als 5,0 Ah und besonders bevorzugt von weniger als 4,0 Ah Stunden auf. Vorzugsweise ist die Handwerkzeugmaschinenladevorrichtung als eine Induktivladevorrichtung ausgebildet. Vorzugsweise sind die zu ladenden Energiespeicher zu einem induktiven Laden vorgesehen und weisen jeweils zumindest eine Sekundärspule auf. Unter einem "Ladebereich" soll in diesem Zusammenhang insbesondere ein Bereich verstanden werden, der zu einer Aufnahme zumindest eines Energiespeichers zumindest zu einem Ladevorgang vorgesehen ist. Vorzugsweise weist die Handwerkzeugmaschinenladevorrichtung zumindest eine Gehäusefläche auf, die den Ladebereich begrenzt und/oder an der ein zu ladender Energiespeicher zumindest zu einem Ladevorgang angeordnet ist. Unter einem "Fremdkörper" soll in diesem Zusammenhang ein Objekt, insbesondere ein zumindest teilweise metallisches Objekt, verstanden werden, das aufgrund seiner Erstreckung, seiner mechanischen und/oder elektromagnetischen Eigenschaften bei einer Anordnung in einem Ladebereich einen Ladevorgang beeinträchtigt und/oder verunmöglicht. Unter einer Detektion eines Fremdkörpers soll in diesem Zusammenhang ein Vorgang verstanden werden, bei dem eine Detektionseinheit prüft, ob ein Fremdkörper in einem Ladebereich angeordnet ist, insbesondere ob ein Fremdkörper an einer Gehäusefläche der Handwerkzeugmaschinenladevorrichtung angeordnet ist, die den Ladebereich begrenzt. Vorzugsweise weisen die Detektionseinheiten jeweils eine Ausgabeeinheit auf, die jeweils dazu vorgesehen ist, ein Ergebnis des Detektionsvorgangs für einen Benutzer erkennbar auszugeben. Vorzugsweise ist die Ausgabeeinheit jeweils zur Ausgabe eines optischen, eines akustischen und/oder eines haptischen Signals vorgesehen. Es ist denkbar, dass die Ausgabeeinheiten jeweils zumindest teilweise einstückig mit Ausgabeeinheiten ausgebildet sind, die jeweils zu einer Anzeige eines Statuswerts eines Ladevorgangs vorgesehen sind. Es ist denkbar, dass die Handwerkzeugmaschinenladevorrichtung eine zentrale Ausgabeeinheit aufweist, die dazu vorgesehen ist, in Abhängigkeit von zumindest einem Ergebnis des Detektionsvorgangs ein für einen Benutzer erkennbares Signal auszugeben. Bevorzugt sind die Detektionseinheit und die zumindest eine weitere Detektionseinheit baugleich zueinander ausgebildet. Es kann eine besonders große Zahl von Gleichteilen erreicht werden. Es kann eine besonders kostengünstige Handwerkzeugmaschinenladevorrichtung bereitgestellt werden. Es ist denkbar, dass die Detektionseinheit und die zumindest eine weitere Detektionseinheit voneinander verschieden ausgebildet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer vorteilhaften Ausgestaltung umfasst die Handwerkzeugmaschinenladevorrichtung eine erste Sendeeinheit, die dazu vorgesehen ist, zu der Energieübertragung Energie abzustrahlen und die zumindest teilweise einstückig mit der ersten Detektionseinheit ausgebildet ist, sowie zumindest eine weitere Sendeeinheit, die dazu vorgesehen ist, zu der Energieübertragung Energie abzustrahlen und die zumindest teilweise einstückig mit der zumindest einen weiteren Detektionseinheit ausgebildet ist. Dadurch kann eine besonders kompakte Handwerkzeugmaschinenladevorrichtung bereitgestellt werden. Es kann ein besonders komfortabler Ladevorgang erreicht werden. Vorzugsweise sind die erste Sendeeinheit und die zumindest eine weitere Sendeeinheit jeweils dazu vorgesehen zu der Energieübertragung ein magnetisches Wechselfeld zu erzeugen. Darunter, dass eine Detektionseinheit und eine Sendeeinheit "zumindest teilweise einstückig miteinander" ausgebildet sind, soll in diesem Zusammenhang insbesondere verstanden werden, dass die Detektionseinheit und die Sendeeinheit zumindest eine gemeinsame Spule, insbesondere eine gemeinsame Primärspule aufweisen, die dazu vorgesehen ist, ein magnetisches Wechselfeld, insbesondere zu der Energieübertragung, zu erzeugen.

In vorteilhafter Weise sind die Detektionseinheiten zumindest teilweise zeitlich aufeinander abgestimmt. Dadurch kann konzeptionell besonders einfach eine gegenseitige Störung der Detektionseinheiten bei einem Detektionsvorgang vermieden werden. Es kann eine besonders flexibel einsetzbare Handwerkzeugmaschinenladevorrichtung bereitgestellt werden. Darunter, dass die Detektionseinheiten "zeitlich abgestimmt" sind soll in diesem Zusammenhang insbesondere verstanden werden, dass die Detektionseinheiten dazu vorgesehen sind, einen Detektionsvorgang zu der Detektion des Fremdkörpers zeitlich aufeinander abzustimmen, insbesondere einen Startzeitpunkt und/oder einen Endzeitpunkt zeitlich aufeinander abzustimmen, und/oder einen Detektionsvorgang zu der Detektion des Fremdkörpers zumindest zeitlich versetzt und/oder nacheinander durchzuführen. Es ist denkbar, dass die Detektionseinheiten jeweils dazu vorgesehen sind, eine Störung eines Detektionsvorgangs durch eine der anderen Detektionseinheiten festzustellen. Es ist denkbar, dass die Detektionseinheiten dazu vorgesehen sind, einen Startzeitpunkt und/oder einen Endzeitpunkt des Detektionsvorgangs in Abhängigkeit von einer festgestellten Störung des Detektionsvorgangs durch eine andere der Detektionseinheiten festzulegen und/oder zu verschieben.

Gemäß der Erfindung wird vorgeschlagen, dass die erste Detektionseinheit und/oder die zumindest eine weitere Detektionseinheit dazu vorgesehen sind/ist, die Detektion eines Fremdkörpers in dem ersten Ladebereich und/oder die Detektion eines Fremdkörpers in dem zumindest einen weiteren Ladebereich zu zumindest im Wesentlichen zufälligen Zeitpunkten zu beginnen. Dadurch kann besonders einfach, beispielsweise durch eine Software-Erweiterung, eine Wahrscheinlichkeit für eine wechselseitige Störung bei einem Detektionsvorgang begrenzt werden oder es kann besonders einfach eine wechselseitige Störung von Detektionsvorgängen verschiedener Detektionseinheiten vermieden werden. Es kann eine besonders kostengünstige Handwerkzeugmaschinenladevorrichtung bereitgestellt werden. Unter "zumindest im Wesentlichen zufälligen Zeitpunkten" sollen in diesem Zusammenhang insbesondere Zeitpunkte verstanden werden, die durch zumindest eine Zufallszahl oder eine Pseudo-Zufallszahl festgelegt sind. Vorzugsweise weisen die Detektionseinheiten jeweils zumindest einen Zufallszahlengenerator auf, der dazu vorgesehen ist, eine Zufallszahl oder eine Pseudozufallszahl zu einer Festlegung von zufälligen Zeitpunkten bereitzustellen. Es ist denkbar, dass der Zufallszahlengenerator als eine Softwarefunktion ausgebildet ist. Alternativ kann die Handwerkzeugmaschinenladevorrichtung einen zentralen Zufallszahlengenerator aufweisen, der dazu vorgesehen ist, eine Zufallszahl oder eine Pseudozufallszahl zu einer Festlegung von zufälligen Zeitpunkten bereitzustellen. Es ist denkbar, dass die Detektionseinheiten nicht aufeinander abgestimmt sind und lediglich dazu vorgesehen sind, die Detektion eines Fremdkörpers in dem ersten Ladebereich und/oder die Detektion eines Fremdkörpers in dem zumindest einen weiteren Ladebereich zu zumindest im Wesentlichen zufälligen Zeitpunkten zu beginnen. In einer alternativen Ausgestaltung kann die Handwerkzeugmaschinenladevorrichtung einen ersten Betriebsmodus aufweisen, in dem die Detektionseinheiten zumindest teilweise aufeinander abgestimmt sind und zumindest einen weiteren Betriebsmodus, in dem die erste Detektionseinheit und/oder die zumindest eine weitere Detektionseinheit dazu vorgesehen sind, die Detektion eines Fremdkörpers in dem ersten Ladebereich und/oder die Detektion eines Fremdkörpers in dem zumindest einen weiteren Ladebereich zu zumindest im Wesentlichen zufälligen Zeitpunkten zu beginnen. Es ist denkbar, dass der zumindest eine weitere Betriebsmodus als ein Rückfallmodus vorgesehen ist, beispielsweise für einen Zustand, in dem eine Abstimmung der Detektionseinheiten gestört ist.

In einer vorteilhaften Ausgestaltung weist die erste Detektionseinheit zumindest einen Frequenzkanal mit einer Frequenz auf und die zumindest eine weitere Detektionseinheit weist zumindest einen weiteren Frequenzkanal auf, der eine von dem Frequenzkanal der ersten Detektionseinheit verschiedene Frequenz aufweist. Dadurch kann eine Mehrzahl von Detektionsvorgängen störungsfrei parallel durchgeführt werden. Fremdkörper können besonderes effizient detektiert werden. Vorzugsweise legt der Frequenzkanal eine Frequenz zu einer Detektion und/oder zu einer Energieübertragung fest.

Ferner wird vorgeschlagen, dass die erste Detektionseinheit und/oder die zumindest eine weitere Detektionseinheit eine Mehrzahl von auswählbaren Frequenzkanälen aufweisen. Dadurch kann besonders flexibel eine wechselseitige Störung eines Detektionsvorgangs vermieden werden. Es kann vorteilhaft eine Handwerkzeugmaschinenladevorrichtung bereitgestellt werden, die um einen oder mehrere Ladebereiche erweitert werden kann. Es ist denkbar, dass die Handwerkzeugmaschinenladevorrichtung zumindest eine Bedieneinheit aufweist, die es einem Benutzer ermöglicht, jeweils einen Frequenzkanal auszuwählen. Es ist ferner denkbar, dass die Detektionseinheiten dazu vorgesehen sind, eine wechselseitige Störung des Detektionsvorgangs festzustellen. Es ist denkbar, dass die Detektionseinheiten dazu vorgesehen sind, einen Frequenzkanal in Abhängigkeit von einer festgestellten Störung des Detektionsvorgangs durch eine andere der Detektionseinheiten festzulegen.

In einer vorteilhaften Ausgestaltung weisen die erste Detektionseinheit und die zumindest eine weitere Detektionseinheit jeweils zumindest eine Schnittstelle zu einer Datenübertragung auf. Dadurch kann eine besonders zuverlässige Datenübertragung zu einer Abstimmung der Detektionseinheiten erreicht werden. Vorzugsweise sind die Schnittstelle der ersten Detektionseinheit und die Schnittstellen der weiteren Detektionseinheiten zu einer Datenübertragung der Detektionseinheiten untereinander vorgesehen. Alternativ ist es denkbar, dass die Handwerkzeugmaschinenladevorrichtung eine zentrale Steuer- und/oder Regeleinheit aufweist und die Schnittstellen dazu vorgesehen sind, die Detektionseinheiten jeweils signal- und/oder datentechnisch mit der zentralen Steuer- und/oder Regeleinheit zu verbinden.

In einer vorteilhaften Ausgestaltung weisen die erste Detektionseinheit und die zumindest eine weitere Detektionseinheit jeweils zumindest eine Bus-Schnittstelle zu einer Datenübertragung auf. Dadurch kann eine Zuverlässigkeit der Datenübertragung weiter erhöht werden. Vorzugsweise sind die Bus-Schnittstelle der ersten Detektionseinheit und die Bus-Schnittstellen der weiteren Detektionseinheiten zu einer Datenübertragung der Detektionseinheiten untereinander vorgesehen.

Ferner wird vorgeschlagen, dass die erste Detektionseinheit und die zumindest eine weitere Detektionseinheit jeweils zumindest eine Schnittstelle zu einer drahtlosen Datenübertragung aufweisen. Dadurch kann eine besonders einfache Montage der Handwerkzeugmaschinenladevorrichtung erreicht werden. Unter einer "drahtlosen Datenübertragung" soll in diesem Zusammenhang insbesondere eine Datenübertragung mittels elektromagnetischer Wellen, beispielsweise mittels Lichtwellen, Funkwellen oder Infrarotwellen, oder eine Datenübertragung mittels Schallwellen verstanden werden. Vorzugsweise sind die Schnittstellen gemäß einem dem Fachmann geeignet erscheinenden Standard, beispielsweise als Wi-Fi-Schnittstellen oder als Bluetooth-Schnittstellen ausgebildet.

Ferner wird ein System mit einer erfindungsgemäßen Handwerkzeugmaschinenladevorrichtung und mit zumindest einem Energiespeicher vorgeschlagen, der dazu vorgesehen ist, mittels der Handwerkzeugmaschinenladevorrichtung geladen zu werden und in zumindest einem Betriebszustand eine Handwerkzeugmaschine mit Energie zu versorgen. Dadurch kann ein besonders zuverlässiges System zum Laden von Energiespeichern für Handwerkzeugmaschinen bereitgestellt werden. Insbesondere ist der Energiespeicher dazu vorgesehen, eine Antriebseinheit der Handwerkzeugmaschine mit Energie zu versorgen. Vorzugsweise weist das System zumindest einen weiteren Energiespeicher auf, der dazu vorgesehen ist, mittels der Handwerkzeugmaschinenladevorrichtung geladen zu werden und in zumindest einem Betriebszustand eine Handwerkzeugmaschine mit Energie zu versorgen.

Gemäß der Erfindung wird ein Verfahren zum drahtlosen Laden von Energiespeichern für Handwerkzeugmaschinen mittels einer Handwerkzeugmaschinenladevorrichtung, vorgeschlagen, bei dem eine erste Detektionseinheit der Handwerkzeugmaschinenladevorrichtung eine Detektion eines Fremdkörpers in einem ersten Ladebereich der Handwerkzeugmaschinenladevorrichtung und zumindest eine weitere Detektionseinheit eine Detektion eines Fremdkörpers in zumindest einem weiteren Ladebereich der Handwerkzeugmaschinenladevorrichtung aufeinander abgestimmt durchführen, wobei die erste Detektionseinheit die Detektion eines Fremdkörpers in dem ersten Ladebereich mit einer ersten Frequenz und die zumindest eine weitere Detektionseinheit die Detektion eines Fremdkörpers in dem weitern Ladebereich mit einer von der ersten Frequenz verschiedenen Frequenz durchfürht. Dadurch kann ein besonders benutzerfreundliches Verfahren zum Laden von Energiespeichern für Handwerkzeugmaschinen erreicht werden. Es kann besonders zuverlässig eine Mehrzahl von Energiespeichern geladen werden. Es kann ein besonders effizientes Verfahren erreicht werden. In vorteilhafter Weise führt die zumindest eine weitere Detektionseinheit die Detektion eines Fremdkörpers in dem zumindest einen weiteren Ladebereich zumindest teilweise zeitlich abgestimmt zu der Detektion eines Fremdkörpers der ersten Detektionseinheit in dem ersten Ladebereich durch. Dadurch kann ein besonders einfaches Verfahren zur Vermeidung von Störungen bei einem Detektionsvorgang erreicht werden.

Gemäß der Erfindung wird vorgeschlagen, dass die erste Detektionseinheit die Detektion eines Fremdkörpers in dem ersten Ladebereich mit einer ersten Frequenz und die zumindest eine weitere Detektionseinheit die Detektion eines Fremdkörpers in dem weiteren Ladebereich mit einer von der ersten Frequenz verschiedenen Frequenz durchführt. Dadurch kann ein besonders effizientes Verfahren erreicht werden, bei dem eine Mehrzahl von Detektionseinheiten gleichzeitig und/oder zumindest zeitlich überlappend einen Fremdkörper in einem Ladebereich detektieren.

Die erfindungsgemäße Handwerkzeugmaschinenladevorrichtung soll hierbei nicht auf die oben beschriebene Anwendung und Ausführungsform beschränkt sein. Insbesondere kann die erfindungsgemäße Handwerkzeugmaschinenladevorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einer Handwerkzeugmaschinenladevorrichtung und mit Energiespeichern in einer schematischen Ansicht,
- Fig. 2: eine schematische Darstellung der Handwerkzeugmaschinenladevorrichtung mit einem Bus,
- Fig. 3: eine schematische Darstellung eines weiteren Ausführungsbeispiels der Handwerkzeugmaschinenladevorrichtung mit Schnittstellen zu einer drahtlosen Datenübertragung und
- Fig. 4: eine schematische Darstellung eines weiteren Ausführungsbeispiels mit zufälligen Anfangszeitpunkten für die Detektion eines Fremdkörpers in entsprechenden Ladebereichen.

### Beschreibung der Ausführungsbeispiele

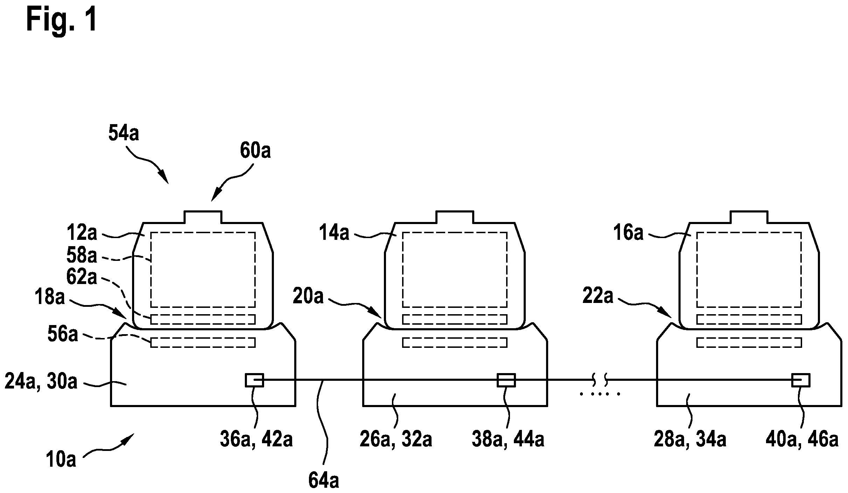

Figur 1 zeigt ein System 54a mit einer Handwerkzeugmaschinenladevorrichtung 10a und mit einer Mehrzahl von Energiespeichern 12a, 14a, 16a für nicht näher dargestellte Handwerkzeugmaschinen. Die Energiespeicher 12a, 14a 16a sind jeweils dazu vorgesehen, mittels der Handwerkzeugmaschinenladevorrichtung 10a geladen zu werden und in zumindest einem Betriebszustand jeweils eine Handwerkzeugmaschine mit Energie zu versorgen. Die Energiespeicher 12a, 14a 16a sind jeweils dazu vorgesehen, zumindest eine Antriebseinheit jeweils einer Handwerkzeugmaschine mit Energie zu versorgen. Die Handwerkzeugmaschinenladevorrichtung 10a ist zum Laden der Energiespeicher 12a, 14a, 16a vorgesehen. Die Handwerkzeugmaschinenladevorrichtung 10a ist zu einer drahtlosen Energieübertragung vorgesehen. Die Handwerkzeugmaschinenladevorrichtung 10a weist einen ersten Ladebereich 18a und eine erste Detektionseinheit 24a zu einer Detektion eines Fremdkörpers in dem ersten Ladebereich 18a auf. Die Handwerkzeugmaschinenladevorrichtung 10a weist zumindest einen weiteren Ladebereich 20a, 22a und zumindest eine weitere Detektionseinheit 26a, 28a zu einer Detektion eines Fremdkörpers in dem weiteren Ladebereich 20a, 22a auf. Die Handwerkzeugmaschinenladevorrichtung 10a weist in dem vorliegenden Ausführungsbeispiel eine Mehrzahl von weiteren Ladebereichen 20a, 22a auf. Die Handwerkzeugmaschinenladevorrichtung 10a weist in dem vorliegenden Ausführungsbeispiel mehr als drei Ladebereiche 18a, 20a, 22a auf. Die Handwerkzeugmaschinenladevorrichtung 10a weist eine Mehrzahl von weiteren Detektionseinheiten 26a, 28a auf. Eine Anzahl von Detektionseinheiten 24a, 26a, 28a entspricht einer Anzahl von Ladebereichen 18a, 20a, 22a. Jeweils ein Ladebereich 18a, 20a, 22a ist jeweils einer Detektionseinheit 24a, 26a, 28a zugeordnet. Die Detektionseinheiten 24a, 26a, 28a sind jeweils zu einer Detektion eines Fremdkörpers in dem der jeweiligen Detektionseinheit 24a, 26a, 28a zugeordneten Ladebereich 18a, 20a, 22a vorgesehen. Die Detektionseinheiten 24a, 26a, 28a der Handwerkzeugmaschinenladevorrichtung 10a sind zumindest teilweise aufeinander abgestimmt.

Die Handwerkzeugmaschinenladevorrichtung 10a ist als eine Induktivladevorrichtung ausgebildet. Die Handwerkzeugmaschinenladevorrichtung 10a weist eine erste Sendeeinheit 30a auf, die dazu vorgesehen ist, zu der Energieübertragung Energie abzustrahlen und die zumindest teilweise einstückig mit der ersten Detektionseinheit 24a ausgebildet ist. Die Handwerkzeugmaschinenladevorrichtung 10a weist zumindest eine weitere Sendeeinheit 32a, 34a auf, die dazu vorgesehen ist, zu der Energieübertragung Energie abzustrahlen und die zumindest teilweise einstückig mit der zumindest einen weiteren Detektionseinheit 26a, 28a ausgebildet ist. Die Handwerkzeugmaschinenladevorrichtung 10a weist in dem vorliegenden Ausführungsbeispiel eine Mehrzahl von Sendeeinheiten 30a, 32a, 34a auf, die jeweils dazu vorgesehen sind, zu der Energieübertragung Energie abzustrahlen und die jeweils zumindest teilweise einstückig mit jeweils einer der Detektionseinheiten 24a, 26a, 28a ausgebildet sind. Die Sendeeinheiten 30a, 32a, 34a sind analog zueinander ausgebildet, weshalb im Folgenden nur die erste Sendeeinheit 30a näher beschrieben wird. Die erste Sendeeinheit 30a umfasst eine Spule 56a. Die Spule 56a der Sendeeinheit 30a ist als eine Primärspule ausgebildet. Die Spule 56a der Sendeeinheit 30a ist dazu vorgesehen, zu der Energieübertragung elektrische Energie in eine magnetische Feldenergie umzuwandeln. Die Spule 56a ist dazu vorgesehen, ein magnetisches Wechselfeld zu erzeugen.

Der erste Ladebereich 18a der Handwerkzeugmaschinenladevorrichtung 10a ist dazu vorgesehen, einen ersten der Energiespeicher 12a zumindest zu einem Ladevorgang aufzunehmen. Die weiteren Ladebereiche 20a, 22a der Handwerkzeugmaschinenladevorrichtung 10a sind dazu vorgesehen, die weiteren der Energiespeicher 14a, 16a zumindest zu einem Ladevorgang aufzunehmen. Der erste Ladebereich 18a und die weiteren Ladebereiche 20a, 22a weisen jeweils eine maximale Erstreckung auf, die in dem vorliegenden Ausführungsbeispiel kleiner als 200 mm ist. Jeweils einer der Energiespeicher 12a, 14a, 16a ist bei einem Ladevorgang jeweils in einem der Ladebereiche 18a, 20a, 22a angeordnet. Die Energiespeicher 12a, 14a, 16a, die zum Laden in dem ersten Ladebereich 18a und/oder in den weiteren Ladebereichen 20a, 22a vorgesehen sind, sind analog zueinander ausgebildet, weshalb im Folgenden nur ein erster der Energiespeicher 12a näher beschrieben ist. Der Energiespeicher 12a weist einen Akkupack 58a auf. Der Energiespeicher 12a weist in dem vorliegenden Ausführungsbeispiel eine Nennspannung von 18 V auf. Der Energiespeicher 12a weist eine Schnittstelle 60a zu einer elektrischen und mechanischen Kopplung mit einer Handwerkzeugmaschine auf. Es ist denkbar, dass der Energiespeicher 12a bei einem Ladevorgang in einem mit einer Handwerkzeugmaschine gekoppelten Zustand in dem Ladebereich 18a angeordnet ist. Es ist denkbar, dass der Energiespeicher 12a in die Handwerkzeugmaschine integriert ist. Der Energiespeicher 12a weist eine Spule 62a auf. Die Spule 62a des Energiespeichers 12a ist als eine Sekundärspule ausgebildet und dazu vorgesehen, eine magnetische Feldenergie in einen elektrischen Strom umzuwandeln. Die Spule 62a des Energiespeichers 12a ist dazu vorgesehen, mit der Spule 56a der Sendeeinheit 30a zu der Energieübertragung zusammenzuwirken. Die Ladebereiche 18a, 20a, 22a sind jeweils dazu vorgesehen, die Spulen 62a der Energiespeicher 12a, 14a, 16a jeweils relativ zu den Spulen 56a der Sendeeinheiten 30a, 32a, 34a räumlich anzuordnen.

Die Detektionseinheiten 24a, 26a, 28a sind zumindest teilweise zeitlich aufeinander abgestimmt. Die Detektionseinheiten 24a, 26a, 28a sind dazu vorgesehen, einen Fremdkörper in den ihnen jeweils zugeordneten Ladebereichen 18a, 20a, 22a zeitlich versetzt zu detektieren. Die Detektionseinheiten 24a, 26a, 28a sind dazu vorgesehen, einen Fremdkörper in den ihnen jeweils zugeordneten Ladebereichen 18a, 20a, 22a nacheinander zu detektieren. Die Handwerkzeugmaschinenladevorrichtung 10a weist in Bezug auf einen Detektionsvorgang eine Reihenfolge der Detektionseinheiten 24a, 26a, 28a auf. Es ist denkbar, dass die Reihenfolge von einem Benutzer festlegbar ist. Es ist denkbar, dass die Handwerkzeugmaschinenladevorrichtung 10a eine Bedieneinheit aufweist, die zu einer Festlegung der Reihenfolge durch einen Benutzer vorgesehen ist. Die Detektionseinheiten 24a, 26a, 28a sind dazu vorgesehen, den Detektionsvorgang zu einer Detektion eines Fremdkörpers nach einem Abschluss eines Detektionsvorgangs einer bezogen auf die Reihenfolge unmittelbar vorangehend angeordneten Detektionseinheit 24a, 26a, 28a zu beginnen. Die Reihenfolge der Detektionseinheiten 24a, 26a, 28a wird in dem vorliegenden Ausführungsbeispiel dynamisch festgelegt. Alternativ ist denkbar, dass die Reihenfolge der Detektionseinheiten 24a, 26a, 28a für den Detektionsvorgang statisch festgelegt ist. Beispielsweise sind die Detektionseinheiten 24a, 26a, 28a dazu vorgesehen, einen Fremdkörper in dem ihnen jeweils zugeordneten Ladebereich 18a, 20a, 22a in einem Betriebszustand nacheinander entsprechend einer räumlichen Anordnung, insbesondere entsprechend einer räumlichen linearen Anordnung, der Ladebereiche 18a, 20a, 22a zu detektieren. Es ist denkbar, dass die Detektionseinheiten 24a, 26a, 28a einen Fremdkörper in dem ihnen jeweils zugeordneten Ladebereich 18a, 20a, 22a in einer anderen dem Fachmann als geeignet erscheinenden Reihenfolge, beispielsweise in Abhängigkeit von einem Gerätetyp, detektieren. Es ist denkbar, dass die Detektionseinheiten 24a, 26a, 28a unterschiedlichen Gruppen zugeordnet sind, beispielsweise entsprechend einer räumlichen Anordnung, insbesondere entsprechend einer räumlichen linearen Anordnung. Es ist denkbar, dass die Gruppen zumindest teilweise zeitlich aufeinander abgestimmt sind und beispielsweise die Detektionseinheiten 24a, 26a, 28a einer Gruppe nacheinander oder gleichzeitig den Detektionsvorgang durchführen.

Die erste Detektionseinheit 24a weist zumindest einen Frequenzkanal mit einer Frequenz auf. Die weiteren Detektionseinheiten 26a, 28a weisen jeweils weitere Frequenzkanäle auf, die jeweils von einem von dem Frequenzkanal der ersten Detektionseinheit 24a verschiedene Frequenzen aufweisen. Die Detektionseinheiten 24a, 26a, 28a weisen in dem vorliegenden Ausführungsbeispiel Frequenzkanäle mit paarweise verschiedenen Frequenzen auf. Die Detektionseinheiten 24a, 26a, 28a sind analog zueinander ausgebildet, weshalb im Folgenden nur die erste Detektionseinheit 24a näher beschrieben wird. Die Detektionseinheit 24a ist dazu vorgesehen, zu der Detektion eines Fremdkörpers in dem der Detektionseinheit 24a zugeordneten Ladebereich 18a ein elektromagnetisches Signal mit der Frequenz des Frequenzkanals zu erzeugen und/oder auszuwerten. Die Detektionseinheit 24a weist einen Schwingkreis auf, der auf die Frequenz des Frequenzkanals eingestellt ist und/oder der dazu vorgesehen ist, auf die Frequenz des Frequenzkanals eingestellt zu werden. Die Frequenz des Frequenzkanals ist als eine Resonanzfrequenz des Schwingkreises ausgebildet. Der Schwingkreis ist dazu vorgesehen, zumindest das elektromagnetische Signal zu der Detektion eines Fremdkörpers zu erzeugen.

Es ist denkbar, dass die Detektionseinheiten 24a, 26a, 28a einen gemeinsamen Frequenzkanal aufweisen mit einer gemeinsamen Frequenz, die zu einer Detektion eines Fremdkörpers in dem der jeweiligen Detektionseinheit 24a, 26a, 28a zugeordneten Ladebereich 18a, 20a, 22a vorgesehen ist. Es ist denkbar, dass die Detektionseinheiten 24a, 26a, 28a lediglich zeitlich aufeinander abgestimmt sind. Es ist auch denkbar, dass die Detektionseinheiten 24a, 26a, 28a nicht zeitlich aufeinander abgestimmt sind, und zu einer Abstimmung lediglich Frequenzkanäle mit unterschiedlichen Frequenzen aufweisen.

In dem vorliegenden Ausführungsbeispiel weist die erste Detektionseinheit 24a eine Mehrzahl von auswählbaren Frequenzkanälen auf. Die weiteren Detektionseinheiten 26a, 28a weisen jeweils eine Mehrzahl von auswählbaren Frequenzkanälen auf. Die Detektionseinheiten 24a, 26a, 28a weisen jeweils zumindest eine Steuer- und/oder Regeleinheit auf. Die Steuer- und/oder Regeleinheiten sind dazu vorgesehen, die Frequenzkanäle der Detektionseinheiten 24a, 26a, 28a zu einer Detektion eines Fremdkörpers in dem der jeweiligen Detektionseinheit 24a, 26a, 28a zugeordneten Ladebereich 18a, 20a, 22a automatisch untereinander abzustimmen. Alternaitv ist denkbar, dass die Frequenzkanäle der Detektionseinheiten 24a, 26a, 28a zu einer Detektion eines Fremdkörpers in dem der jeweiligen Detektionseinheit 24a, 26a, 28a zugeordneten Ladebereich 18a, 20a, 22a statisch abgestimmt sind. Es ist auch denkbar, dass die Detektionseinheiten 24a, 26a, 28a jeweils ein nicht näher dargestelltes Bedienelement aufweisen, das zu einer Betätigung durch einen Benutzer zu einer Auswahl eines Frequenzkanals als einem aktiven Frequenzkanal vorgesehen ist. Es ist denkbar, dass die Handwerkzeugmaschinenladevorrichtung 10a ein zentrales Bedienelement aufweist, das zu einer Betätigung durch einen Benutzer zu einer Auswahl und/oder Zuordnung von Frequenzkanälen zu den Detektionseinheiten 24a, 26a, 28a vorgesehen ist. In dem vorliegenden Ausführungsbeispiel weisen die Schwingkreise der Detektionseinheiten 24a, 26a, 28a einstellbare Resonanzfrequenzen auf. Beispielsweise können Kenngrößen, wie eine Kapazität und/oder eine Induktivität zumindest eines Schwingkreiselements verändert werden. In einer alternativen Ausgestaltung ermöglichen es die Steuer- und/oder Regeleinheiten, die Schwingkreise mit einer einstellbaren Frequenz anzuregen.

Die erste Detektionseinheit 24a und die weiteren Detektionseinheiten 26a, 28a weisen jeweils zumindest eine Schnittstelle 36a, 38a, 40a zu einer Datenübertragung auf. Die Schnittstelle 36a der ersten Detektionseinheit 24a und die Schnittstellen 38a, 40a der weiteren Detektionseinheiten 26a, 28a sind zu einem Datenaustausch der Detektionseinheiten 24a, 26a, 28a untereinander vorgesehen. Die Schnittstellen 36a, 38a, 40a sind zu einer Abstimmung der Detektionseinheiten 24a, 26a, 28a untereinander vorgesehen. Die Schnittstellen 36a, 38a, 40a sind in dem vorliegenden Ausführungsbeispiel dazu vorgesehen, Signale zu einer dynamischen Abstimmung der Reihenfolge der Detektionsvorgänge der Detektionseinheiten 24a, 26a, 28a zu übermitteln und/oder zu empfangen. In dem vorliegenden Ausführungsbeispiel stimmen die Detektionseinheiten 24a, 26a, 28a eine Reihenfolge dynamisch, beispielsweise aufgrund einer Priorisierung untereinander ab. Die Priorisierung kann abhängig von einem Gerätetyp der Handwerkzeugmaschinenladevorrichtung 10a, abhängig von einem Gerätetyp eines zu ladenden Energiespeichers 12a, 14a, 16a, abhängig von einer räumlichen Anordnung der Ladebereiche 18a, 20a, 22a und/oder abhängig von einem anderen dem Fachmann geeignet erscheinenden Parameter ausgebildet sein.

Die Schnittstellen 36a, 38a, 40a sind in dem vorliegenden Ausführungsbeispiel dazu vorgesehen, Signale zu einer dynamischen Abstimmung der Frequenzkanäle der Detektionseinheiten 24a, 26a, 28a zu übermitteln. Es ist denkbar, dass die Detektionseinheiten 24a, 26a, 28a die Frequenzkanäle zu einer Detektion eines Fremdkörpers abhängig von einem Gerätetyp des zu ladenden Akkupacks 58, abhängig von einer räumlichen Anordnung der Ladebereiche 18a, 20a, 22a und/oder abhängig von einem anderen dem Fachmann geeignet erscheinenden Parameter abstimmen. Die Schnittstelle 36a der ersten Detektionseinheit 24a und die Schnittstellen 38a, 40a der weiteren Detektionseinheiten 24a, 26a, 28a sind jeweils zu einer kabelgebundenen Datenübertragung vorgesehen.

Die erste Detektionseinheit 24a und die weiteren Detektionseinheiten 26a, 28a weisen jeweils eine Bus-Schnittstelle 42a, 44a, 46a zu einer Datenübertragung auf. Die Schnittstelle 36a der ersten Detektionseinheit 24a ist als eine Bus-Schnittstelle 42a ausgebildet. Die Schnittstellen 38a, 40a der weiteren Detektionseinheiten 26a, 28a sind jeweils als eine Bus-Schnittstelle 44a, 46a ausgebildet. Die Handwerkzeugmaschinenladevorrichtung 10a weist einen Bus 64a auf, der in einem montierten Zustand die Detektionseinheiten 24a, 26a, 28a mittels der Bus-Schnittstellen 42a, 44a, 46a der Detektionseinheiten 24a, 26a, 28a signaltechnisch miteinander verbindet. Die Bus-Schnittstelle 42a der ersten Detektionseinheit 24a ist zu einer signaltechnischen Anbindung der ersten Detektionseinheit 24a an den Bus 64a der Handwerkzeugmaschinenladevorrichtung 10a vorgesehen. Die Bus-Schnittstellen 44a, 46a der weiteren Detektionseinheiten 26a, 28a sind jeweils zu einer signaltechnischen Anbindung der weiteren Detektionseinheiten 26a, 28a an den Bus 64a der Handwerkzeugmaschinenladevorrichtung 10a vorgesehen.

Bei einem Verfahren zum drahtlosen Laden der Energiespeicher 12a, 14a, 16a von Handwerkzeugmaschinen mittels der Handwerkzeugmaschinenladevorrichtung 10a führt die erste Detektionseinheit 24a der Handwerkzeugmaschinenladevorrichtung 10a eine Detektion eines Fremdkörpers in dem ersten Ladebereich 18a der Handwerkzeugmaschinenladevorrichtung 10a und die weiteren Detektionseinheiten 26a, 28a der Handwerkzeugmaschinenladevorrichtung 10a eine Detektion eines Fremdkörpers in weiteren Ladebereichen 20a, 22a der Handwerkzeugmaschinenladevorrichtung 10a aufeinander abgestimmt durch. Bei dem Verfahren erzeugt die erste Detektionseinheit 24a ein elektromagnetisches Signal und/oder wertet es aus. Die weiteren Detektionseinheiten 26a, 28a erzeugen abgestimmt auf die erste Detektionseinheit 24a und abgestimmt untereinander ein elektromagnetisches Signal und/oder werten es aus.

Bei dem Verfahren führen die weiteren Detektionseinheiten 26a, 28a die Detektion eines Fremdkörpers in den weiteren Ladebereichen 20a, 22a zumindest teilweise zeitlich abgestimmt zu der Detektion eines Fremdkörpers der ersten Detektionseinheit 24a in dem ersten Ladebereich 18a durch. In dem vorliegenden Ausführungsbeispiel führen die erste Detektionseinheit 24a und die weiteren Detektionseinheiten 26a, 28a den jeweiligen Detektionsvorgang dynamisch aufeinander abgestimmt aus. Beispielsweise ermitteln die Steuer- und/oder Regeleinheiten der Detektionseinheiten 24a, 26a, 28a einen Prioritätswert, der jeweils einer der Detektionseinheiten 24a, 26a, 28a zugeordnet ist, und stimmen anhand des Prioritätswerts eine Reihenfolge bezüglich des Detektionsvorgangs ab. Die Detektionseinheiten 24a, 26a, 28a stimmen die Reihenfolge mittels einer Datenübertragung über die Schnittstellen 36a, 38a, 40a miteinander ab. Die Detektionseinheiten 24a, 26a, 28a bestimmen den Prioritätswert beispielsweise abhängig von einem Gerätetyp, abhängig von einer Gerätenummer, abhängig von einer räumlichen Anordnung der den Detektionseinheiten 24a, 26a, 28a zugeordneten Ladebereichen 18a, 20a, 22a und/oder abhängig von einem weiteren dem Fachmann sinnvoll erscheinenden Parameter.

Eine der Detektionseinheiten 24a weist eine erste Position in der Reihenfolge auf, beispielsweise die erste Detektionseinheit 24a. Die Detektionseinheit 24a führt den Detektionsvorgang für den ihr zugeordneten Ladebereich 18a durch. Die Detektionseinheit 24a übermittelt den Abschluss des Detektionsvorgangs an die bezogen auf die Reihenfolge nachfolgend angeordneten Detektionseinheiten 26a, 28a mittels der Schnittstelle 36a der Detektionseinheit 24a. Eine der Detektionseinheiten 26a weist eine zweite Position in der Reihenfolge auf. Die Detektionseinheit 26a führt den Detektionsvorgang analog zu der Detektionseinheit 24a an der ersten Position aus. Die Detektionseinheit 26a an der zweiten Position übermittelt den Abschluss des Detektionsvorgangs an die bezogen auf die Reihenfolge nachfolgend angeordneten Detektionseinheiten 28a mittels der Schnittstelle 38a der Detektionseinheit 26a. Analog führen die bezogen auf die Reihenfolge nachfolgend angeordneten Detektionseinheiten 28a den Detektionsvorgang durch.

In einer alternativen Ausgestaltung, führen die Detektionseinheiten 24a, 26a, 28a zu der Abstimmung einer Reihenfolge den Detektionsvorgang testweise zumindest zum Teil gleichzeitig durch. Die Detektionseinheiten 24a, 26a, 28a stellen dabei fest, ob der Detektionsvorgang durch eine jeweils andere Detektionseinheit 24a, 26a, 28a gestört wird. Bei einer Störung verschieben die Detektionseinheiten 24a, 26a, 28a den Startzeitpunkt für ihren Detektionsvorgang jeweils nach hinten. In Abhängigkeit von einem Ergebnis einer Prüfung, ob ein Detektionsvorgang durch eine jeweils andere Detektionseinheit 24a, 26a, 28a gestört wird, führen die Detektionseinheiten 24a, 26a, 28a den Detektionsvorgang jeweils zeitlich versetzt und/oder nacheinander aus.

Bei dem Verfahren führt die erste Detektionseinheit 24a die Detektion eines Fremdkörpers in dem ersten Ladebereich 18a mit einer ersten Frequenz durch und die weiteren Detektionseinheiten 26a, 28a führen die Detektion eines Fremdkörpers in den weiteren Ladebereichen 20a, 22a mit einer von der ersten Frequenz verschiedenen Frequenz durch. In dem vorliegenden Ausführungsbeispiel führen die weiteren Detektionseinheiten 26a, 28a die Detektion eines Fremdkörpers in den weiteren Ladebereichen 20a, 22a mit einer von der ersten Frequenz und mit einer paarweise verschiedenen Frequenz durch. In dem vorliegenden Ausführungsbeispiel führen die erste Detektionseinheit 24a und die weiteren Detektionseinheiten 26a, 28a den jeweiligen Detektionsvorgang bezogen auf eine Frequenz dynamisch aufeinander abgestimmt aus. Die Detektionseinheiten 24a, 26a, 28a bestimmen die Frequenzen der einzelnen Detektionseinheiten 24a, 26a, 28a beispielsweise abhängig von einem Gerätetyp, abhängig von einer Gerätenummer, abhängig von einer räumlichen Anordnung der den Detektionseinheiten 24a, 26a, 28a zugeordneten Ladebereichen 18a, 20a, 22a und/oder abhängig von einem weiteren dem Fachmann sinnvoll erscheinenden Parameter. Die Detektionseinheiten 24a, 26a, 28a übermitteln die Frequenzen der Detektionseinheiten 24a, 26a, 28a mittels der Schnittstellen 36a, 38a, 40a. Es ist denkbar, dass die Detektionseinheiten 24a, 26a, 28a bei dem Verfahren den Detektionsvorgang lediglich zeitlich abstimmen. Es ist denkbar, dass bei dem Verfahren die Detektionseinheiten 24a, 26a, 28a einen Fremdkörper in dem der jeweiligen Detektionseinheit 24a, 26a, 28a zugeordneten Ladebereich 18a, 20a, 22a mit einer gemeinsamen Frequenz detektieren. Alternativ ist denkbar, dass die Detektionseinheiten 24a, 26a, 28a bei dem Verfahren den Detektionsvorgang lediglich in Bezug auf die Frequenzen abstimmen.

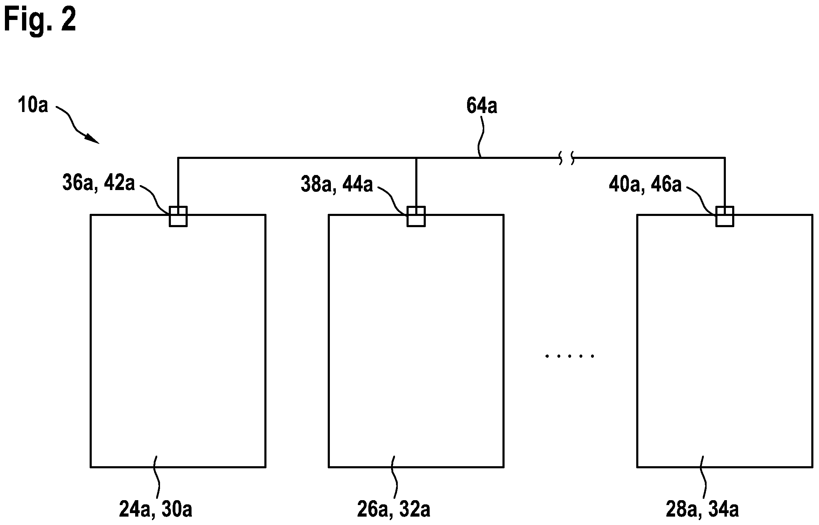

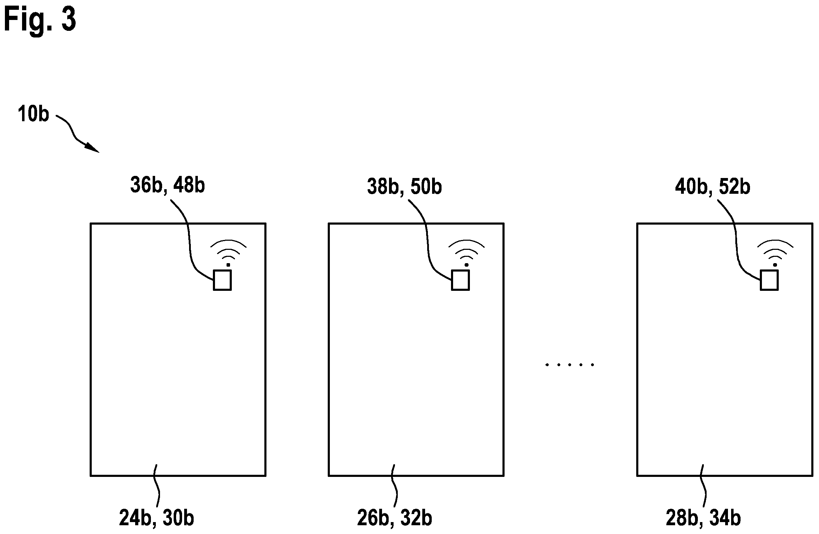

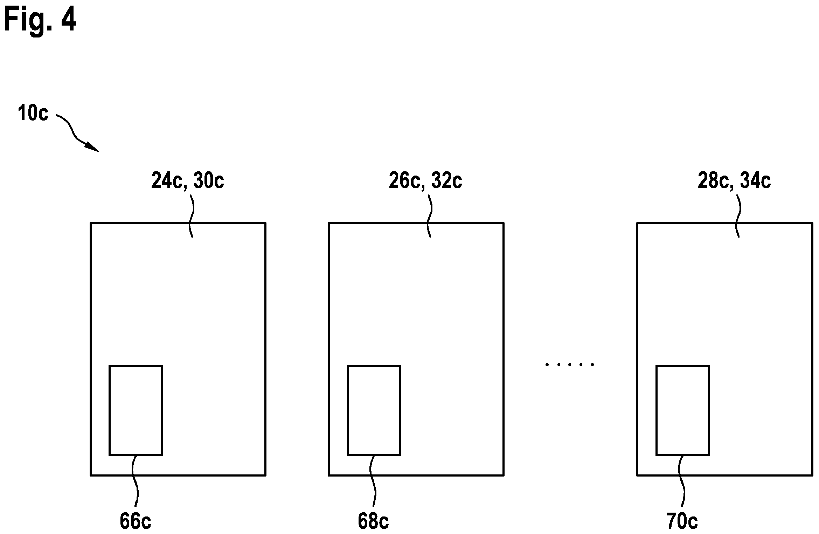

In den Figuren 3 und 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 5 ist der Buchstabe a durch die Buchstaben b und c ersetzt.

Figur 3 zeigt ein weiteres Ausführungsbeispiel einer Handwerkzeugmaschinenladevorrichtung 10b für Energiespeicher von Handwerkzeugmaschinen, die zu einer drahtlosen Energieübertragung vorgesehen ist. Die Handwerkzeugmaschinenladevorrichtung 10b weist analog zu dem vorangehenden Ausführungsbeispiel einen ersten Ladebereich und eine erste Detektionseinheit 24b zu einer Detektion eines Fremdkörpers in dem ersten Ladebereich auf. Die Handwerkzeugmaschinenladevorrichtung 10b weist zumindest einen weiteren Ladebereich und zumindest eine weitere Detektionseinheit 26b, 28b zu einer Detektion eines Fremdkörpers in den weiteren Ladebereichen auf. Die Handwerkzeugmaschinenladevorrichtung 10b weist eine Mehrzahl von weiteren Ladebereichen auf. Eine Anzahl von Detektionseinheiten 24b, 26b, 28b entspricht einer Anzahl von Ladebereichen. Jeweils ein Ladebereich ist jeweils einer Detektionseinheit 24b, 26b, 28b zugeordnet. Die Detektionseinheiten 24b, 26b, 28b sind jeweils zu einer Detektion eines Fremdkörpers in dem der jeweiligen Detektionseinheit 24b, 26b, 28b zugeordneten Ladebereich vorgesehen. Die Detektionseinheiten 24b, 26b, 28b der Handwerkzeugmaschinenladevorrichtung 10b sind zumindest teilweise aufeinander abgestimmt.

Die Handwerkzeugmaschinenladevorrichtung 10b ist analog zu dem vorangehenden Ausführungsbeispiel als eine Induktivladevorrichtung ausgebildet. Die Handwerkzeugmaschinenladevorrichtung 10b weist eine erste Sendeeinheit 30b auf, die dazu vorgesehen ist, zu der Energieübertragung Energie abzustrahlen und die zumindest teilweise einstückig mit der ersten Detektionseinheit 24b ausgebildet ist. Die Handwerkzeugmaschinenladevorrichtung 10b weist zumindest eine weitere Sendeeinheit 32b, 34b auf, die dazu vorgesehen ist, zu der Energieübertragung Energie abzustrahlen und die zumindest teilweise einstückig mit der zumindest einen weiteren Detektionseinheit 26b, 28b ausgebildet ist. Die Handwerkzeugmaschinenladevorrichtung 10b weist in dem vorliegenden Ausführungsbeispiel eine Mehrzahl von Sendeeinheiten 30b, 32b, 34b auf, die jeweils dazu vorgesehen sind, zu der Energieübertragung Energie abzustrahlen und die jeweils zumindest teilweise einstückig mit jeweils einer der Detektionseinheiten 24b, 26b, 28b ausgebildet sind. Die Ladebereiche sind analog zu dem vorangehenden Ausführungsbeispiel ausgebildet.

Die Detektionseinheiten 24b, 26b, 28b sind analog zu dem vorangehenden Ausführungsbeispiel zumindest teilweise zeitlich aufeinander abgestimmt. Die Detektionseinheiten 24b, 26b, 28b sind dazu vorgesehen, einen Fremdkörper in den ihnen jeweils zugeordneten Ladebereichen zeitlich versetzt zu detektieren. Die Detektionseinheiten 24b, 26b, 28b sind dazu vorgesehen, einen Fremdkörper in den ihnen jeweils zugeordneten Ladebereichen nacheinander zu detektieren. Die Handwerkzeugmaschinenladevorrichtung 10b weist in Bezug auf einen Detektionsvorgang eine Reihenfolge der Detektionseinheiten 24b, 26b, 28b auf. Es ist denkbar, dass die Reihenfolge von einem Benutzer festlegbar ist. Es ist denkbar, dass die Handwerkzeugmaschinenladevorrichtung 10b eine Bedieneinheit aufweist, die zu einer Festlegung der Reihenfolge durch einen Benutzer vorgesehen ist.

Die erste Detektionseinheit 24b weist analog zu dem vorangehenden Ausführungsbeispiel zumindest einen Frequenzkanal mit einer Frequenz auf. Die weiteren Detektionseinheiten 26b, 28b weisen jeweils weitere Frequenzkanäle auf, die jeweils von einem von dem Frequenzkanal der ersten Detektionseinheit 24b verschiedene Frequenzen aufweisen. Die Detektionseinheiten 24b, 26b, 28b weisen in dem vorliegenden Ausführungsbeispiel Frequenzkanäle mit paarweise verschiedenen Frequenzen auf. Analog zu dem vorangehenden Ausführungsbeispiel weist die erste Detektionseinheit 24b eine Mehrzahl von auswählbaren Frequenzkanälen auf. Die weiteren Detektionseinheiten 26b, 28b weisen jeweils eine Mehrzahl von auswählbaren Frequenzkanälen auf. Die Detektionseinheiten 24b, 26b, 28b sind dazu vorgesehen, die Frequenzkanäle der Detektionseinheiten 24b, 26b, 28b zu einer Detektion eines Fremdkörpers in dem der jeweiligen Detektionseinheit 24b, 26b, 28b zugeordneten Ladebereich automatisch untereinander abzustimmen.

Die erste Detektionseinheit 24b und die weiteren Detektionseinheiten 26b, 28b weisen jeweils zumindest eine Schnittstelle 38b zu einer Datenübertragung auf. Die Schnittstelle 36b der ersten Detektionseinheit 24b und die Schnittstellen 38b, 40b der weiteren Detektionseinheiten 26b, 28b sind zu einem Datenaustausch der Detektionseinheiten 24b, 26b, 28b untereinander vorgesehen. Die Schnittstellen 36b, 38b, 40b sind zu einer Abstimmung der Detektionseinheiten 24b, 26b, 28b untereinander vorgesehen. Die Schnittstellen 36b, 38b, 40b sind in dem vorliegenden Ausführungsbeispiel dazu vorgesehen, Signale zu einer dynamischen Abstimmung der Reihenfolge der Detektionsvorgänge der Detektionseinheiten 24b, 26b, 28b zu übermitteln und/oder zu empfangen.

Im Unterschied zu dem vorangehenden Ausführungsbeispiel weisen die erste Detektionseinheit 24b und die weiteren Detektionseinheiten 26b, 28b jeweils zumindest eine Schnittstelle 48b, 50b, 52b zu einer drahtlosen Datenübertragung auf. Die Schnittstelle 36b der ersten Detektionseinheit 24b ist als eine Schnittstelle 48b zu einer drahtlosen Datenübertragung ausgebildet. Die Schnittstellen 38b, 40b, der weiteren Detektionseinheiten 26b, 28b sind jeweils als eine Schnittstelle 50b, 52b zu einer drahtlosen Datenübertragung ausgebildet. Die Schnittstelle 48b der ersten Detektionseinheit 24b zu einer drahtlosen Datenübertragung und die Schnittstellen 50b, 52b der weiteren Detektionseinheiten 26b, 28b zu einer drahtloschen Datenübertragung sind in dem vorliegenden Ausführungsbeispiel als standardisierte Schnittstellen 48b, 50b, 52b zu einer drahtlosen Datenübertragung ausgebildet. Die Schnittstelle 48b der ersten Detektionseinheit 24b zu einer drahtlosen Datenübertragung und die Schnittstellen 50b, 52b der weiteren Detektionseinheiten 26b, 28b zu einer drahtlosen Datenübertragung sind in dem vorliegenden Ausführungsbeispiel als Wi-fi-Schnittstellen ausgebildet. Es ist denkbar, dass die Schnittstellen 48b, 50b, 52b einen anderen dem Fachmann als geeignet erscheinenden Standard aufweisen und beispielsweise als Bluetooth-Schnittstellen ausgebildet sind.

Bei einem Verfahren zum drahtlosen Laden der Energiespeicher von Handwerkzeugmaschinen mittels der Handwerkzeugmaschinenladevorrichtung 10b führt die erste Detektionseinheit 24b der Handwerkzeugmaschinenladevorrichtung 10b analog zu dem vorangehenden Ausführungsbeispiel eine Detektion eines Fremdkörpers in dem ersten Ladebereich der Handwerkzeugmaschinenladevorrichtung 10b und die weiteren Detektionseinheiten 26b, 28b der Handwerkzeugmaschinenladevorrichtung 10b eine Detektion eines Fremdkörpers in weiteren Ladebereichen der Handwerkzeugmaschinenladevorrichtung 10b aufeinander abgestimmt durch. Bei dem Verfahren führen die weiteren Detektionseinheiten 26b, 28b die Detektion eines Fremdkörpers in den weiteren Ladebereichen zumindest teilweise zeitlich abgestimmt zu der Detektion eines Fremdkörpers der ersten Detektionseinheit 24b in dem ersten Ladebereich durch. In dem vorliegenden Ausführungsbeispiel führen die erste Detektionseinheit 24b und die weiteren Detektionseinheiten 26b, 28b den jeweiligen Detektionsvorgang dynamisch aufeinander abgestimmt aus. Beispielsweise ermitteln Steuer- und/oder Regeleinheiten der Detektionseinheiten 24b, 26b, 28b einen Prioritätswert, der jeweils einer der Detektionseinheiten 24b, 26b, 28b zugeordnet ist, und stimmen anhand des Prioritätswerts eine Reihenfolge bezüglich des Detektionsvorgangs ab. Die Detektionseinheiten 24b, 26b, 28b stimmen die Reihenfolge mittels einer Datenübertragung über die Schnittstellen 48b, 50b, 52b drahtlos miteinander ab.

Bei dem Verfahren führt die erste Detektionseinheit 24b die Detektion eines Fremdkörpers in dem ersten Ladebereich mit einer ersten Frequenz durch und die weiteren Detektionseinheiten 26b, 28b führen die Detektion eines Fremdkörpers in den weiteren Ladebereichen mit einer von der ersten Frequenz verschiedenen Frequenz durch. Die Detektionseinheiten 24b, 26b, 28b führen die Detektion eines Fremdkörpers in den weiteren Ladebereichen mit einer von der ersten Frequenz und mit einer paarweise verschiedenen Frequenz durch. Die erste Detektionseinheit 24b und die weiteren Detektionseinheiten 26b, 28b führen den jeweiligen Detektionsvorgang bezogen auf eine Frequenz dynamisch aufeinander abgestimmt aus. Die Detektionseinheiten 24b, 26b, 28b übermitteln die Frequenzen der Detektionseinheiten 24b, 26b, 28b drahtlos mittels der Schnittstellen 48b, 50b, 52b.

Figur 4 zeigt ein weiteres Ausführungsbeispiel einer Handwerkzeugmaschinenladevorrichtung 10c für Energiespeicher von Handwerkzeugmaschinen, die zu einer drahtlosen Energieübertragung vorgesehen ist. Die Handwerkzeugmaschinenladevorrichtung 10c weist analog zu dem vorangehenden Ausführungsbeispiel einen ersten Ladebereich und eine erste Detektionseinheit 24c zu einer Detektion eines Fremdkörpers in dem ersten Ladebereich auf. Die Handwerkzeugmaschinenladevorrichtung 10c weist zumindest einen weiteren Ladebereich und zumindest eine weitere Detektionseinheit 26c, 28c zu einer Detektion eines Fremdkörpers in dem weiteren Ladebereich auf. Die Handwerkzeugmaschinenladevorrichtung 10c weist eine Mehrzahl von weiteren Ladebereichen auf. Eine Anzahl von Detektionseinheiten 24c, 26c, 28c entspricht einer Anzahl von Ladebereichen. Jeweils ein Ladebereich ist jeweils einer Detektionseinheit 24c, 26c, 28c zugeordnet. Die Detektionseinheiten 24c, 26c, 28c sind jeweils zu einer Detektion eines Fremdkörpers in dem der jeweiligen Detektionseinheit 24c, 26c, 28c zugeordneten Ladebereich vorgesehen. Im Unterschied zu den vorangehenden Ausführungsbeispielen ist die erste Detektionseinheit 24c dazu vorgesehen, die Detektion eines Fremdkörpers in dem ersten Ladebereich zu einem zumindest im Wesentlichen zufälligen Zeitpunkt zu beginnen. Die weiteren Detektionseinheiten 26c, 28c sind dazu vorgesehen, die Detektion eines Fremdkörpers in den weiteren Ladebereichen zu zumindest im Wesentlichen zufälligen Zeitpunkten zu beginnen.

Die erste Detektionseinheit 24c weist in dem vorliegenden Ausführungsbeispiel einen Zufallszahlengenerator 66c auf, der dazu vorgesehen ist, eine Pseudozufallszahl zu einer Festlegung eines Startzeitpunkts des Detektionsvorgangs der ersten Detektionseinheit 24c festzulegen. Die weiteren Detektionseinheiten 26c, 28c weisen jeweils einen Zufallszahlengenerator 68c, 70c auf. Die Zufallszahlengeneratoren 68c, 70c sind jeweils dazu vorgesehen, eine Pseudozufallszahl zu einer Festlegung eines Startzeitpunkts des jeweiligen Detektionsvorgangs bereitzustellen.

Die Handwerkzeugmaschinenladevorrichtung 10c ist analog zu den vorangehenden Ausführungsbeispielen als eine Induktivladevorrichtung ausgebildet. Die Handwerkzeugmaschinenladevorrichtung 10c weist eine erste Sendeeinheit 30c auf, die dazu vorgesehen ist, zu der Energieübertragung Energie abzustrahlen und die zumindest teilweise einstückig mit der ersten Detektionseinheit 24c ausgebildet ist. Die Handwerkzeugmaschinenladevorrichtung 10c weist zumindest eine weitere Sendeeinheit 32c, 34c auf, die dazu vorgesehen ist, zu der Energieübertragung Energie abzustrahlen und die zumindest teilweise einstückig mit der zumindest einen weiteren Detektionseinheit 26c, 28c ausgebildet ist. Die Handwerkzeugmaschinenladevorrichtung 10c weist in dem vorliegenden Ausführungsbeispiel eine Mehrzahl von Sendeeinheiten 30c, 32c, 34c auf, die jeweils dazu vorgesehen sind, zu der Energieübertragung Energie abzustrahlen und die jeweils zumindest teilweise einstückig mit jeweils einer der Detektionseinheiten 24c, 26c, 28c ausgebildet sind.

Die Ladebereiche der Handwerkzeugmaschinenladevorrichtung 10c sind analog zu dem vorangehenden Ausführungsbeispiel ausgebildet. Die erste Detektionseinheit 24c weist zumindest einen Frequenzkanal mit einer Frequenz auf. Es ist denkbar, dass die weiteren Detektionseinheiten 26c, 28c analog zu den vorangehenden Ausführungsbeispielen jeweils weitere Frequenzkanäle aufweisen, die jeweils von einem von dem Frequenzkanal der ersten Detektionseinheit 24c verschiedene Frequenzen aufweisen. Es ist denkbar, dass die erste Detektionseinheit 24c eine Mehrzahl von auswählbaren Frequenzkanälen aufweist und dass die weiteren Detektionseinheiten 26c, 28c jeweils eine Mehrzahl von auswählbaren Frequenzkanälen aufweisen.

Im Unterschied zu den vorangehenden Ausführungsbeispielen weisen die erste Detektionseinheit 24c und die weiteren Detektionseinheiten 26c, 28c jeweils keine Schnittstelle zu einer Datenübertragung auf. Die Detektionseinheiten 26c, 28c sind in dem vorliegenden Ausführungsbeispiel datentechnisch unabhängig voneinander ausgebildet.

Bei einem Verfahren zum drahtlosen Laden von Energiespeichern von Handwerkzeugmaschinen mittels der Handwerkzeugmaschinenladevorrichtung 10c bestimmen die erste Detektionseinheit 24c der Handwerkzeugmaschinenladevorrichtung 10c eine Detektion eines Fremdkörpers in dem ersten Ladebereich der Handwerkzeugmaschinenladevorrichtung 10c und die weiteren Detektionseinheiten 26c, 28c der Handwerkzeugmaschinenladevorrichtung 10c eine Detektion eines Fremdkörpers in weiteren Ladebereichen der Handwerkzeugmaschinenladevorrichtung 10c paarweise unabhängig voneinander einen Startzeitpunkt für einen Detektionsvorgang. Die erste Detektionseinheit 24c und die weiteren Detektionseinheiten 26c, 28c führen den jeweiligen Detektionsvorgang zu dem jeweils bestimmten Startzeitpunkt durch. Die erste Detektionseinheit 24c und die weiteren Detektionseinheiten 26c, 28c detektieren einen Fremdkörper in dem der jeweiligen Detektionseinheit 24c zugeordneten Ladebereich zufällig zeitlich zueinander versetzt und/oder nacheinander.

## Patentansprüche

1. Handwerkzeugmaschinenladevorrichtung für Energiespeicher (12a, 14a, 16a) von Handwerkzeugmaschinen, die zu einer drahtlosen Energieübertragung vorgesehen ist, mit einem ersten Ladebereich (18a) und einer ersten Detektionseinheit (24a; 24b; 24c) zu einer Detektion eines Fremdkörpers in dem ersten Ladebereich (18a), und mit zumindest einem weiteren Ladebereich (20a, 22a) und zumindest einer weiteren Detektionseinheit (26a, 28a; 26b, 28b; 26c, 28c) zu einer Detektion eines Fremdkörpers in dem zumindest einen weiteren Ladebereich (20a, 22a), **dadurch gekennzeichnet, dass** die Detektionseinheiten (24a, 26a, 28a; 24b, 26b, 28b; 24c, 26c, 28c) zumindest teilweise aufeinander abgestimmt sind, wobei die erste Detektionseinheit (24c) und/oder die zumindest eine weitere Detektionseinheit (26c, 28c) dazu vorgesehen sind/ist die Detektion eines Fremdkörpers in dem ersten Ladebereich und/oder die Detektion eines Fremdkörpers in dem zumindest einen weiteren Ladebereich zu zumindest im Wesentlichen zufälligen Zeitpunkten zu beginnen.

2. Handwerkzeugmaschinenladevorrichtung nach Anspruch 1,
**gekennzeichnet durch** eine erste Sendeeinheit (30a; 30b; 30c), die dazu vorgesehen ist, zu der Energieübertragung Energie abzustrahlen und die zumindest teilweise einstückig mit der ersten Detektionseinheit (24a; 24b; 24c) ausgebildet ist, und zumindest eine weitere Sendeeinheit (32a, 34a; 32b, 34b; 32c, 34c), die dazu vorgesehen ist, zu der Energieübertragung Energie abzustrahlen und die zumindest teilweise einstückig mit der zumindest einen weiteren Detektionseinheit (26a, 28a; 26b, 28b; 26c, 28c) ausgebildet ist.

3. Handwerkzeugmaschinenladevorrichtung nach Anspruch 1 oder 2,
**dadurch gekennzeichnet, dass** die Detektionseinheiten (24a, 26a, 28a; 24b, 26b, 28b) zumindest teilweise zeitlich aufeinander abgestimmt sind.

4. Handwerkzeugmaschinenladevorrichtung nach einem der vorhergehenden Ansprüche, **dadurch gekennzeichnet, dass** die erste Detektionseinheit (24a; 24b; 24c) zumindest einen Frequenzkanal mit einer Frequenz aufweist und die zumindest eine weitere Detektionseinheit (26a, 28a; 26b, 28b; 26c, 28c) zumindest einen weiteren Frequenzkanal aufweist, der eine von dem Frequenzkanal der ersten Detektionseinheit (24a; 24b; 24c) verschiedene Frequenz aufweist.

5. Handwerkzeugmaschinenladevorrichtung nach einem der vorhergehenden Ansprüche, **dadurch gekennzeichnet, dass** die erste Detektionseinheit (24a; 24b; 24c) und/oder die zumindest eine weitere Detektionseinheit (26a, 28a; 26b, 28b; 26c, 28c) eine Mehrzahl von auswählbaren Frequenzkanälen aufweisen.

6. Handwerkzeugmaschinenladevorrichtung nach einem der vorhergehenden Ansprüche, **dadurch gekennzeichnet, dass** die erste Detektionseinheit (24a, 24b) und die zumindest eine weitere Detektionseinheit (26a, 28a; 26b, 28b) jeweils zumindest eine Schnittstelle (36a, 38a, 40a; 36b, 38b, 40b) zu einer Datenübertragung aufweisen.

7. Handwerkzeugmaschinenladevorrichtung nach einem der vorhergehenden Ansprüche, **dadurch gekennzeichnet, dass** die erste Detektionseinheit (24a) und die zumindest eine weitere Detektionseinheit (26a, 28a) jeweils zumindest eine Bus-Schnittstelle (42a, 44a, 46a) zu einer Datenübertragung aufweisen.

8. Handwerkzeugmaschinenladevorrichtung nach einem der vorhergehenden Ansprüche, **dadurch gekennzeichnet, dass** die erste Detektionseinheit (24b) und die zumindest eine weitere Detektionseinheit (26b, 28b) jeweils zumindest eine Schnittstelle (48b, 50b, 52b) zu einer drahtlosen Datenübertragung aufweisen.

9. System mit einer Handwerkzeugmaschinenladevorrichtung (10a; 10b, 10c) nach einem der vorhergehenden Ansprüche und mit zumindest einem Energiespeicher (12a, 14a, 16a), der dazu vorgesehen ist, mittels der Handwerkzeugmaschinenladevorrichtung (10a, 10b, 10c) geladen zu werden und in zumindest einem Betriebszustand eine Handwerkzeugmaschine mit Energie zu versorgen.

10. Verfahren zum drahtlosen Laden von Energiespeichern (12a, 14a, 16a) für Handwerkzeugmaschinen mittels einer Handwerkzeugmaschinenladevorrichtung (10a; 10b; 10c), **dadurch gekennzeichnet, dass** eine erste Detektionseinheit (24a; 24b; 24c) der Handwerkzeugmaschinenladevorrichtung (10a; 10b; 10c) eine Detektion eines Fremdkörpers in einem ersten Ladebereich (18a) der Handwerkzeugmaschinenladevorrichtung (10a; 10b; 10c) und zumindest eine weitere Detektionseinheit (26a, 28a; 26b, 28b; 26c, 28c) eine Detektion eines Fremdkörpers in zumindest einem weiteren Ladebereich (20a, 22a) der Handwerkzeugmaschinenladevorrichtung (10a; 10b; 10c) aufeinander abgestimmt durchführen, wobei die erste Detektionseinheit (24a; 24b; 24c) die Detektion eines Fremdkörpers in dem ersten Ladebereich (18a) mit einer ersten Frequenz und die zumindest eine weitere Detektionseinheit (26a, 28a; 26b, 28b; 26c, 28c) die Detektion eines Fremdkörpers in dem weiteren Ladebereich (20a, 22a) mit einer von der ersten Frequenz verschiedenen Frequenz durchführt.

11. Verfahren nach Anspruch 10, **dadurch gekennzeichnet, dass** die zumindest eine weitere Detektionseinheit (26a, 28a; 26b, 28b) die Detektion eines Fremdkörpers in dem zumindest einen weiteren Ladebereich (20a, 22a) zumindest teilweise zeitlich abgestimmt zu der Detektion eines Fremdkörpers der ersten Detektionseinheit (24a; 24b) in dem ersten Ladebereich (18a) durchführt.

## Claims

1. Handheld power tool charging apparatus for energy stores (12a, 14a, 16a) of handheld power tools, which is intended to wirelessly transmit energy, having a first charging region (18a) and a first detection unit (24a; 24b; 24c) for detecting a foreign body in the first charging region (18a), and having at least one further charging region (20a, 22a) and at least one further detection unit (26a, 28a; 26b, 28b; 26c, 28c) for detecting a foreign body in the at least one further charging region (20a, 22a), **characterized in that** the detection units (24a, 26a, 28a; 24b, 26b, 28b; 24c, 26c, 28c) are at least partially matched to one another, wherein the first detection unit (24c) and/or the at least one further detection unit (26c, 28c) is/are intended to start the detection of a foreign body in the first charging region and/or the detection of a foreign body in the at least one further charging region at at least substantially random times.

2. Handheld power tool charging apparatus according to Claim 1, **characterized by** a first transmitting unit (30a; 30b; 30c) which is intended to emit energy for the energy transmission and is formed at least partially in one piece with the first detection unit (24a; 24b; 24c), and at least one further transmitting unit (32a, 34a; 32b, 34b; 32c, 34c) which is intended to emit energy for the energy transmission and is formed at least partially in one piece with the at least one further detection unit (26a, 28a; 26b, 28b; 26c, 28c).

3. Handheld power tool charging apparatus according to Claim 1 or 2, **characterized in that** the detection units (24a, 26a, 28a; 24b, 26b, 28b) are at least partially matched to one another in terms of time.

4. Handheld power tool charging apparatus according to one of the preceding claims, **characterized in that** the first detection unit (24a; 24b; 24c) has at least one frequency channel with a frequency and the at least one further detection unit (26a, 28a; 26b, 28b; 26c, 28c) has at least one further frequency channel having a frequency which differs from the frequency channel of the first detection unit (24a; 24b; 24c).

5. Handheld power tool charging apparatus according to one of the preceding claims, **characterized in that** the first detection unit (24a; 24b; 24c) and/or the at least one further detection unit (26a, 28a; 26b, 28b; 26c, 28c) has/have a plurality of selectable frequency channels.

6. Handheld power tool charging apparatus according to one of the preceding claims, **characterized in that** the first detection unit (24a; 24b) and the at least one further detection unit (26a, 28a; 26b, 28b) each have at least one interface (36a, 38a, 40a; 36b, 38b, 40b) for transmitting data.

7. Handheld power tool charging apparatus according to one of the preceding claims, **characterized in that** the first detection unit (24a) and the at least one further detection unit (26a, 28a) each have at least one bus interface (42a, 44a, 46a) for transmitting data.

8. Handheld power tool charging apparatus according to one of the preceding claims, **characterized in that** the first detection unit (24b) and the at least one further detection unit (26b, 28b) each have at least one interface (48b, 50b, 52b) for wirelessly transmitting data.

9. System having a handheld power tool charging apparatus (10a; 10b; 10c) according to one of the preceding claims and having at least one energy store (12a, 14a, 16a) which is intended to be charged by means of the handheld power tool charging apparatus (10a, 10b, 10c) and to supply a handheld power tool with energy in at least one operating state.

10. Method for wirelessly charging energy stores (12a, 14a, 16a) for handheld power tools by means of a handheld power tool charging apparatus (10a; 10b; 10c), **characterized in that** a first detection unit (24a; 24b; 24c) of the handheld power tool charging apparatus (10a; 10b; 10c) detects a foreign body in a first charging region (18a) of the handheld power tool charging apparatus (10a; 10b; 10c) and at least one further detection unit (26a, 28a; 26b, 28b; 26c, 28c) detects a foreign body in at least one further charging region (20a, 22a) of the handheld power tool charging apparatus (10a; 10b; 10c) in a manner matched to one another, wherein the first detection unit (24a; 24b; 24c) detects a foreign body in the first charging region (18a) at a first frequency and the at least one further detection unit (26a, 28a; 26b, 28b; 26c, 28c) detects a foreign body in the further charging region (20a, 22a) at a frequency which differs from the first frequency.

11. Method according to Claim 10, **characterized in that** the at least one further detection unit (26a, 28a; 26b, 28b) detects a foreign body in the at least one further charging region (20a, 22a) at least partially in a manner matched in terms of time to the detection of a foreign body by the first detection unit (24a; 24b) in the first charging region (18a).

## Revendications

1. Dispositif de charge de machines-outils portatives destiné à des accumulateurs d'énergie (12a, 14a, 16a) de machines-outils portatives, qui est conçu pour transmettre de l'énergie sans fil, comprenant une première zone de charge (18a) et une première unité de détection (24a ; 24b ; 24c) destinée à détecter un corps étranger dans la première zone de charge (18a), et comprenant au moins une autre zone de charge (20a, 22a) et au moins une autre unité de détection (26a, 28a ; 26b, 28b ; 26c, 28c) destinée à détecter un corps étranger dans ladite au moins une autre zone de charge (20a, 22a), **caractérisé en ce que** les unités de détection (24a, 26a, 28a ; 24b, 26b, 28b ; 24c, 26c, 28c) sont au moins partiellement coordonnées entre elles, dans lequel la première unité de détection (24c) et/ou ladite au moins une autre unité de détection (26c, 28c) est/sont conçue(s) pour commencer la détection d'un corps étranger dans la première zone de charge et/ou la détection d'un corps étranger dans ladite au moins une autre zone de charge à des instants au moins sensiblement aléatoires.

2. Dispositif de charge de machines-outils portatives selon la revendication 1, **caractérisé par** une première unité d'émission (30a ; 30b ; 30c) qui est conçue pour rayonner de l'énergie à des fins de transmission d'énergie et qui est au moins partiellement réalisée d'un seul tenant avec la première unité de détection (24a ; 24b ; 24c), et par au moins une autre unité d'émission (32a, 34a ; 32b, 34b ; 32c, 34c) qui est conçue pour rayonner de l'énergie à des fins de transmission d'énergie et qui est au moins partiellement formée d'un seul tenant avec ladite au moins une autre unité de détection (26a, 28a ; 26b, 28b ; 26c, 28c).

3. Dispositif de charge de machines-outils portatives selon la revendication 1 ou 2, **caractérisé en ce que** les unités de détection (24a, 26a, 28a ; 24b, 26b, 28b) sont au moins partiellement coordonnées entre elles dans le temps.

4. Dispositif de charge de machines-outils portatives selon l'une des revendications précédentes, **caractérisé en ce que** la première unité de détection (24a ; 24b ; 24c) comporte au moins un canal de fréquence présentant une fréquence et ladite au moins une autre unité de détection (26a, 28a ; 26b, 28b ; 26c, 28c) comporte au moins un autre canal de fréquence qui présente une fréquence différente du canal de fréquence de la première unité de détection (24a ; 24b ; 24c).

5. Dispositif de charge de machines-outils portatives selon l'une des revendications précédentes, **caractérisé en ce que** la première unité de détection (24a ; 24b ; 24c) et/ou ladite au moins une autre unité de détection (26a, 28a ; 26b, 28b ; 26c, 28c) présentent plusieurs canaux de fréquence sélectionnables.

6. Dispositif de charge de machines-outils portatives selon l'une des revendications précédentes, **caractérisé en ce que** la première unité de détection (24a, 24b) et ladite au moins une autre unité de détection (26a, 28a ; 26b, 28b) présentent chacune au moins une interface (36a, 38a, 40a ; 36b, 38b, 40b) destinée à la transmission de données.

7. Dispositif de charge de machines-outils portatives selon l'une des revendications précédentes, **caractérisé en ce que** la première unité de détection (24a) et ladite au moins une autre unité de détection (26a, 28a) présentent chacune au moins une interface de bus (42a, 44a, 46a) destinée à la transmission de données.

8. Dispositif de charge de machines-outils portatives selon l'une des revendications précédentes, **caractérisé en ce que** la première unité de détection (24b) et ladite au moins une autre unité de détection (26b, 28b) présentent chacune au moins une interface (48b, 50b, 52b) destinée à la transmission de données sans fil.

9. Système comportant un dispositif de charge de machines-outils portatives (10a ; 10b, 10c) selon l'une des revendications précédentes et comportant au moins un accumulateur d'énergie (12a, 14a, 16a) qui est destiné à être chargé au moyen du dispositif de charge de machines-outils portatives (10a, 10b, 10c) et à alimenter en énergie une machine-outil portative dans au moins un état de fonctionnement.

10. Procédé de charge sans fil d'accumulateurs d'énergie (12a, 14a, 16a) destinés à des machines-outils portatives au moyen d'un dispositif de charge de machines-outils portatives (10a ; 10b ; 10c), **caractérisé en ce qu'**une première unité de détection (24a ; 24b ; 24c) du dispositif de charge de machines-outils portatives (10a ; 10b ; 10c) détecte un corps étranger dans une première zone de charge (18a) du dispositif de charge de machines-outils portatives (10a ; 10b ; 10c) et au moins une autre unité de détection (26a, 28a ; 26b, 28b ; 26c, 28c) effectue une détection d'un corps étranger dans au moins une autre zone de charge (20a, 22a) du dispositif de charge de machines-outils portatives (10a ; 10b ; 10c) d'une manière coordonnée entre elles, dans lequel la première unité de détection (24a ; 24b ; 24c) effectue la détection d'un corps étranger dans la première zone de charge (18a) à une première fréquence et ladite au moins une autre unité de détection (26a, 28a ; 26b, 28b ; 26c, 28c) effectue la détection d'un corps étranger dans l'autre zone de charge (20a, 22a) à une fréquence différente de la première fréquence.

11. Procédé selon la revendication 10, **caractérisé en ce que** ladite au moins une autre unité de détection (26a, 28a ; 26b, 28b) effectue la détection d'un corps étranger dans ladite au moins une autre zone de charge (20a, 22a) de manière au moins partiellement coordonnée dans le temps avec la détection d'un corps étranger de la première unité de détection (24a ; 24b) dans la première zone de charge (18a).
